(19) **Europäisches Patentamt**

**European Patent Office**

**Office européen des brevets**

(11) **EP 0 922 967 B1**

(12) **EUROPÄISCHE PATENTSCHRIFT**

(45) Veröffentlichungstag und Bekanntmachung des Hinweises auf die Patenterteilung:
**21.04.2004   Patentblatt 2004/17**

(51) Int Cl.$^7$: **G01S 13/28**, G01S 13/58

(21) Anmeldenummer: **98122828.1**

(22) Anmeldetag: **01.12.1998**

(54) **Verfahren zum Betrieb eines Radarsystems**

Method for operating a radar system

Procédé de fonctionnement d'un système radar

(84) Benannte Vertragsstaaten:
**ES FR GB IT SE**

(30) Priorität: **10.12.1997   DE 19754720**

(43) Veröffentlichungstag der Anmeldung:
**16.06.1999   Patentblatt 1999/24**

(73) Patentinhaber:
 • **Mende, Ralph, Dr.**
  **38102 Braunschweig (DE)**
 • **Rohling, Hermann, Prof. Dr.**
  **38304 Wolfembüttel (DE)**

(72) Erfinder:
 • **Die Erfinder haben auf ihre Nennung verzichtet**

(74) Vertreter: **Rehmann, Thorsten, Dipl.-Ing. et al**
 **GRAMM, LINS & PARTNER**
 **Theodor-Heuss-Strasse 1**
 **38122 Braunschweig (DE)**

(56) Entgegenhaltungen:
**DE-A- 4 244 608          US-A- 5 592 170**

 • **CURRIE N.C. & BROWN C.E.: "Principles and Applications of Millimeter-wave Radar" 1987 , ARTECH HOUSE , USA XP002118861 * Paragraph 6.5.2: "Frequency-Stepped High-Range-Resolution Technique", Seite 296 - Seite 298 * * Paragraph 13.3.3: "Stepped Frequency Waveform", Seite 630 - Seite 633 ***
 • **WEHNER D.R.: "High Resolution Radar, Second Edition" 1995 , ARTECH HOUSE , USA XP002118862 * Paragraph 5.2: "Concept of synthetic range-profile generation", Seite 200 - Seite 209 ***

**Beschreibung**

Radarsysteme werden zur Bestimmung der Entfernung zu bewegten oder ruhenden Objekten (Zielobjekten) und/oder zur Bestimmung der (Relativ-)Geschwindigkeit von bewegten oder ruhenden Objekten (Zielobjekten) in unterschiedlichen Beobachtungsbereichen (Entfernungsbereichen) eingesetzt. Hauptanwendungsgebiete für Radarsysteme sind in der Regel Beobachtungsbereiche mit großen Entfernungen zwischen dem Radar und dem/den Zielobjekt/en ("Fernbereich", bsp. je nach Anwendung bis 150 km oder 300 km Entfernung), bsp. in der Luftfahrt bei der Flugsicherung oder zu Navigationszwecken; daneben gibt es in jüngster Zeit auch Anwendungen für Radarsysteme in Beobachtungsbereichen mit sehr geringer Entfernung zwischen dem Radar und dem/den Zielobjekt/en ("Nahbereich", bsp. je nach Anwendung bis 20 m oder 250 m), bsp. im KFZ-Bereich zur Bestimmung der Entfernung (des Abstands) zu vorausfahrenden, nachfolgenden oder entgegenkommenden Kraftfahrzeugen oder sonstigen Reflexionsobjekten und/oder der Relativgeschwindigkeit von vorausfahrenden, nachfolgenden oder entgegenkommenden Kraftfahrzeugen oder sonstigen Reflexionsobjekten. Das von der Sendeeinheit des Radarsystems mittels eines Oszillators generierte und von einer (Sende-)Antenne emittierte analoge hochfrequente Sendesignal (Sendefrequenz im GHz-Bereich, typischerweise zwischen 18 GHz und 94 GHz) wird nach dem Durchlaufen einer Übertragungsstrecke und der Reflexion an den im Beobachtungsbereich befindlichen Zielobjekten (Reflexionsobjekten) von der (Empfangs-)Antenne der Empfangseinheit des Radarystems detektiert und dieses Empfangssignal (Reflexionssignal) nach der Signalverarbeitung (Weiterverarbeitung) hinsichtlich Laufzeit und/oder Frequenzverschiebung bzw. Phasenverschiebung ausgewertet; hieraus kann dann die benötigte Entfernungs- und/oder Geschwindigkeits-Information gewonnen werden.

Die beiden gebräuchlichen Radarsysteme, das Puls-Radarsystem und das FMCW-Radarsystem, unterscheiden sich im Meßprinzip, insbesondere in der Generierung des Sendesignals und im (zeitlichen) Verlauf des Sendesignals:

• beim Puls-Radarsystem wird das Sendesignal zyklisch unterbrochen, d.h. von der Sendeeinheit werden Sendepulse mit bestimmter Pulsdauer emittiert; in den Pulspausen zwischen zwei Sendepulsen werden von der Empfangseinheit die Reflexionssignale der vorausgehenden Sendepulse als Empfangssignale detektiert (abwechselnder Sendebetrieb und Empfangsbetrieb). Die Entfernung zu dem/den Zielobjekt/en (Reflexionsobjekt/en) wird durch eine direkte (Signal-)Laufzeitmessung ermittelt, die gewünschte Auflösung (Entfernungsauflösung) des Puls-Radarsystems kann über die Pulsdauer (die Pulsbreite) der Sendepulse vorgegeben werden. Zur Enfernungsselektion werden bei der Signalverarbeitung des Empfangssignals üblicherweise verschiedenen SignalLaufzeiten entsprechende und damit für eine ganz bestimmte Entfernung selektive "Entfernungstore" eingesetzt.

Von Vorteil ist beim Puls-Radarsystem, daß einerseits eine Sende-Empfangs-Entkopplung leicht möglich ist, d.h. ein übersprechen des Sendesignals in die Empfangseinheit kann durch geeignete Umschaltung vom Sendebetrieb zum Empfangsbetrieb (bsp. mittels sende-Empfangs-Schaltern) vollständig verhindert werden, und daß andererseits durch Vorgabe einer entfernungsabhängigen Verstärkung bei der signalverarbeitung mittels laufzeitabhängiger Regelung der Empfindlichkeit der Signalverstärkung ("Sensitivity Time Control" STC) der zu verarbeitende Dynamikbereich des Empfangssignals (die Eingangsdynamik bei der Detektion des Empfangssignals) deutlich reduziert werden kann.

Nachteilig sind beim Puls-Radarsystem dessen Komplexität und die hiermit verbundenen hohen Kosten, da einerseits die Entfernungsauflösung alleine von der Pulsdauer abhängt und somit bei den zur Realisierung einer hohen Entfernungsauflösung (bsp. 1 m) erforderlichen sehr kurzen Pulsdauern auch eine sehr schnelle Signalverarbeitung des Empfangssignals erforderlich ist (bsp. durch digitale Abtastung des Empfangssignals mittels A/D-Wandlern mit hoher Taktfrequenz), und da andererseits die Signalverarbeitung des Empfangssignals sehr aufwendig ist und zudem durch die Bandbreite des Sendesignals bestimmt wird.

• beim FMCW-Radarsystem wird das Sendesignal von der Sendeeinheit kontinuierlich emittiert ("continuous wave" cw), wobei die Sendefrequenz des Sendesignals variiert wird, d.h. durch Frequenzmodulation (FM) einen bestimmten Modulationsverlauf aufweist; gleichzeitig wird das Empfangssignal von der Empfangseinheit detektiert.

Von Vorteil ist beim FMCW-Radarsystem, daß der Aufwand für die Signalverarbeitung des Empfangssignals auch bei hoher Bandbreite des sendesignals relativ gering ist, und daß die Entfernung sowie die Relativgeschwindigkeit der im Beobachtungsbereich befindlichen Zielobjekte (Reflexionsobjekte) sehr exakt und mit jeweils hoher Auflösung ermittelt werden kann.

Nachteilig ist beim FMCW-Radarsystem, daß infolge des gleichzeitigen Betriebs von sendeeinheit und von Empfangseinheit (gleichzeitiger Sendebetrieb und Empfangsbetrieb) ein hoher Aufwand für eine ausreichende Sende-Empfangs-Entkopplung erforderlich ist. Diese Sende-Empfangs-Entkopplung wird bsp. entweder durch den Aufbau separater Antennen für den Sendebetrieb und den Empfangsbetrieb oder durch Verwendung hochwertiger und damit kostspieliger Bauelemente, insbesondere von Kopplern, realisiert, was einerseits hohe Kosten und andererseits störende Nebeneffekte verursacht (bsp. infolge der nicht-idealen Eigenschaften der Antennen oder Bauelemente).

Der Erfindung liegt die Aufgabe zugrunde, ein Verfahren zum Betrieb eines Radarsystems anzugeben, bei dem die mit dem Betrieb eines Puls-Radarsystems und eines FMCW-Radarsystems verbundenen Nachteile vermieden werden und mit dem insbesondere auf einfache Weise und mit geringen Kosten eine Entfernungsbestimmung zu mindestens einem Zielobjekt (Reflexionsobjekt) mit hoher Auflösung (bsp. 1 m) ermöglicht wird.

Diese Aufgabe wird nach der Erfindung durch die Merkmale im Kennzeichen des Patentanspruchs 1 gelöst.

Vorteilhafte Weiterbildungen des verfahrens sind Bestandteil der weiteren Patentansprüche.

Beim vorgestellten Verfahren zum Betrieb eines Radarsystems kann eindeutig die Entfernung (der Abstand) und/oder die Radialgeschwindigkeit mehrerer Reflexionsobjekte (insbesondere sämtlicher im Beobachtungsbereich befindlicher Reflexionsobjekte) gleichzeitig oder getrennt bestimmt werden. Hierzu ist vorgesehen, daß während jeder Meßphase eines Meßvorgangs mehrfach in kurzen zeitlichen Abständen (μs-Bereich) zwischen einem Sendebetrieb und einem Empfangsbetrieb umgeschaltet wird; das verhältnis der Zeitdauer des Sendebetriebs zur Zeitdauer des Empfangsbetrieb kann dabei je nach den Anforderungen beliebig vorgegeben werden. In jeder Meßphase des Meßvorgangs wird im jeweiligen Sendebetrieb von mindestens einer Sendeeinheit des Radarsystems ein pulsförmiges Sendesignal mit Sendepulsen einer bestimmten Pulsdauer (bsp. 1 μs) und einer bestimmten Trägerfrequenz (Sendefrequenz) emittiert, wobei während des Sendebetriebs alle Empfangseinheiten des Radarsystems abgeschaltet werden; im Falle einer Entfernungsbestimmung wird zudem während mindestens einer Meßphase des Meßvorgangs ein frequenzmoduliertes Sendesignal mit aufgeprägten bzw. überlagerten Sendepulsen emittiert, d.h. es wird ein frequenzmoduliertes pulsförmiges Sendesignal mit in sukzessiven Frequenzschritten zeitlich aufeinanderfolgenden Sendepulsen einer variablen Trägerfrequenz vorgegeben. In jeder Meßphase des Meßvorgangs werden im jeweiligen Empfangsbetrieb, d.h. in den Pulspausen der Sendepulse, von mindestens einer Empfangseinheit des Radarsystems sämtliche vom letztmalig emittierten Sendepuls (vom Sendepuls des vorherigen Sendebetriebs) stammenden Reflexionssignale aus dem gesamten Beobachtungsbereich vor dem Wechsel zum nächsten Sendebetrieb, d.h. vor der Emission des nächsten Sendepulses detektiert, wobei während des Empfangsbetriebs alle Sendeeinheiten des Radarsystems abgeschaltet werden. Von der Signalverarbeitungseinheit wird in jeder Meßphase des Meßvorgangs als Meßergebnis die Frequenzdifferenz und/oder die Phasendifferenz zwischen dem Sendesignal und dem Empfangssignal ermittelt (die Dopplerfrequenz sämtlicher im Beobachtungsbereich befindlicher Reflexionsobjekte) und hieraus die Entfernung und/oder die (Radial-)Geschwindigkeit der Reflexionsobjekte bestimmt. In den Meßphasen des Meßvorgangs mit einer Frequenzmodulation der Trägerfrequenz (Sendefrequenz) wird sowohl eine Laufzeitmessung als auch eine Messung der Dopplerverschiebung vorgenommen; die Bestimmung von Entfernung und (Radial-)Geschwindigkeit der Reflexionsobjekte erfolgt durch Auswertung der Sendepulse verschiedener Trägerfrequenz (Sendefrequenz) und damit über eine Messung von Frequenzdifferenzen und/oder Phasendifferenzen des Empfangssignals. Die Pulsdauer der während des Sendebetriebs emittierten Sendepulse kann gegenüber einem vergleichbaren Puls-Radarsystem relativ groß gewählt werden, insbesondere da die (Entfernungs-)Auflösung nicht durch die Pulsdauer sondern über die Frequenzbandbreite des frequenzmodulierten Sendesignals bestimmt wird.

Somit wird einerseits in Analogie zum Betrieb eines Puls-Radarsystems die Sendeeinheit und die Empfangseinheit durch Umschalten vom Sendebetrieb zum Empfangsbetrieb zeitlich entkoppelt und durch den beschriebenen zeitlichen Verlauf des Sendesignals die erforderliche Eingangsdynamik für die Detektion des Empfangssignals (Reflexionssignals) gering gehalten; andererseits wird in Analogie zum Betrieb eines FMCW-Radarsystems die Bestimmung von Entfernung und (Radial-)Geschwindigkeit der Reflexionsobjekte indirekt durch Messung der Frequenzdifferenz und/oder Phasendifferenz zwischen Sendesignal und Empfangssignal vorgenommen (also nicht durch eine direkte Laufzeitmessung), wodurch eine hohe Auflösung und eine einfache Signalverarbeitung ermöglicht wird.

vorzugsweise wird in mindestens einer Meßphase des Meßvorgangs ein linear frequenzmoduliertes Sendesignal mit aufgeprägten bzw. überlagerten Sendepulsen innerhalb einer vorgegebenen Frequenzbandbreite emittiert (d.h. es wird ein frequenzmoduliertes pulsförmiges Sendesignal mit sukzessiven Sendepulsen einer linear variierten Trägerfrequenz vorgegeben); demnach wird jeweils während eines Sendepulses die Trägerfrequenz (Sendefrequenz) konstant gehalten, die Trägerfrequenz aber von Sendepuls zu Sendepuls innerhalb einer vorgegebenen Frequenzbandbreite kontinuierlich variiert.

Beispielsweise kann ein rampenförmiger Verlauf des frequenzmodulierten pulsförmigen Sendesignals vorgegeben werden, d.h. in einer Meßphase des Meßvorgangs steigt die Trägerfrequenz (Sendefrequenz) des Sendesignals linear an und in einer anderen Meßphase des Meßvorgangs (bsp. in der darauffolgenden Meßphase des Meßvorgangs) fällt die Trägerfrequenz des Sendesignals linear ab; demzufolge wird die Trägerfrequenz (Sendefrequenz) in einer Meßphase des Meßvorgangs innerhalb der Frequenzbandbreite von einer Minimalfrequenz bis zu einer Maximalfreqeuenz erhöht (Rampenanstieg) und In einer anderen Meßphase des Meßvorgangs innerhalb der Frequenzbandbreite von der Maximalfrequenz bis zur Minimalfrequenz erniedrigt (Rampenabfall).

In einer Meßphase des Meßvorgangs (bsp. in einer an die beiden Meßphasen mit dem rampenförmigen Verlauf des frequenzmodulierten pulsförmigen Sendesignals anschließenden Meßphase) kann die Trägerfrequenz (Sendefrequenz) des Sendesignals konstant vorgegeben werden, so daß die Sendepulse in dieser Meßphase alle mit der gleichen Trägerfrequenz (Sendefrequenz) emittiert werden; hierdurch wird in dieser Meßphase nur eine Messung der Dopplerverschiebung (Frequenzdifferenz) vorgenommen, die zur Absicherung der Meßergebnisse der anderen Meßphasen des Meßvorgangs dient (Plausibilitätsbetrachtung)

In mindestens einer Meßphase des Meßvorgangs können innerhalb der für die Frequenzmodulation vorgegebenen Frequenzbandbreite des Sendesignals in einem Frequenzschritt mit jeweils konstanter Trägerfrequenz und mit bestimmter Zeitdauer mehrere aufeinanderfolgende Sendepulse mit gleicher Trägerfrequenz emittiert werden.

von der Signalverarbeitungseinheit kann das von der Empfangseinheit in der Pulspause des letztmalig emittierten Sendepulses detektierte Empfangssignal bzw. Reflexionssignal dieses Sendepulses unmittelbar weiterverarbeitet und digitalisiert werden (Abtastung des analogen Empfangssignals durch A/D-Wandlung). Alternativ hierzu können von der signalverarbeitungseinheit die von der Empfangseinheit jeweils in einer Pulspause detektierten Reflexionssignale bzw. Empfangssignale mehrerer zeitlich aufeinanderfolgender Sendepulse analog integriert und anschließend digitalisiert werden.

Zur Generierung des pulsförmigen Verlaufs des Sendesignals (der Sendepulse) kann eine Umschalteinheit mit geeigneten Sende-Empfangs-Umschaltern vorgesehen werden, durch die zwischen dem Sendebetrieb und dem Empfangsbetrieb umgeschaltet wird.

Für den Sendebetrieb und den Empfangsbetrieb kann eine (gemeinsame) Antenne vorgesehen werden, wobei diese Antenne beim Wechsel vom sendebetrieb" zum Empfangsbetrieb und umgekehrt vom Empfangsbetrieb zum Sendebetrieb umgeschaltet wird (bsp. mittels eines HF-Umschalters).

Zur Vorgabe des frequenzmodulierten zeitlichen Verlaufs des Sendesignals kann ein modulierbarer VCO vorgesehen werden, bsp. ist ein linear modulierbarer VCO zur Vorgabe eines linear frequenzmodulierten zeitlichen Verlaufs des Sendesignals vorgesehen.

Falls im Radarsystem mehrere sendeeinheiten und/oder mehrere Empfangseinheiten zur Emission der Sendesignale bzw. zur Detektion der Empfangssignale vorgesehen sind, können für verschiedene Meßvorgänge und/oder für verschiedene Meßphasen eines Meßvorgangs unterschiedliche Antennen oder aber gleichzeitig mehrere sendeeinheiten und/oder Empfangseinheiten Verwendung finden.

Das einfache Verfahrens zum Betrieb eines Radarsystems bietet vorteihafterweise eine sehr hohe Leistungsfähigkeit (hohe Entfernungsauflösung) bei geringem Signalverarbeitungsaufwand und geringen Kosten, da

- aufgrund des (insbesondere mit hoher Umschaltfrequenz erfolgenden) Wechsels zwischen Sendebetrieb und Empfangsbetrieb und dem Abschalten von Empfangseinheit und Sendeeinheit eine zeitliche Sende-Empfangs-Entkopplung ermöglicht und ein Übersprechen zwischen Sendeeinheit und Empfangseinheit verhindert wird,

- aufgrund der großen Pulsdauer der sendepulse und aufgrund der einem FMCW-Radarsystem entsprechenden Signalverarbeitung des Empfangssignals ein geringer Aufwand bei der Signalverarbeitung bei guter Enfernungsauflösung möglich ist,

- nur eine einzige Anntenne (Einzelantenne) erforderlich ist, die gleichzeitig für den Sendebetrieb und den Empfangsbetrieb eingesetzt werden kann,

- für die Sendepulse ein variables und insbesondere ein großes Verhältnis von Pulsdauer zu Pulspause (und damit ein hoher "Duty-Cycle") vorgegeben werden kann, was eine hohe mittlere Sendeleistung des Radarsystems mit sich bringt.

Das Verfahren zum Betrieb eines Radarsystems soll anhand eines Ausführungsbeispiels, einem Abstandssensor für ein KFZ-Abstandswarnsystem, im Zusammenhang mit der Zeichnung näher erläutert werden.

Hierbei zeigt:

     die Figur 1 ein schematisches Blockschaltbild des Radarsystems,

     die Figur 2 den zeitlichen Verlauf des Sendesignals während eines Meßvorgangs mit mehreren Meßphasen und

     die Figur 3 einen vergrößerten Ausschnitt des zeitlichen Verlauf des Sendesignals während einer Meßphase des Meßvorgangs.

Von Abstandssensoren in KFZ-Abstandswarnsystemen muß die Entfernung (und ggf. die Relativgeschwindigkeit) von mindestens einem Zielobjekt, d.h. von vorausfahrenden, entgegenkommenden oder nachfolgenden Fahrzeugen, Personen und sonstigen Reflexionsobjekten, in der Regel gleichzeitig von sämtlichen im Beobachtungsbereich befindlichen Zielobjekten, eindeutig und mit hoher Auflösung bestimmt werden; bsp. beträgt der gewünschte Entfernungseindeutigkeitsbereich 150 m (dieser ist im Vergleich zu anderen Radarsystemen relativ klein), die gewünschte Entfernungsauflösung 1 m und die gewünschte Geschwindigkeitsauflösung 1 m/s. In mindestens einer Meßphase des Meßvorgangs wird hierzu von der (Sende-)Antenne des "gepulsten FMCW-Radarsystems" ein Sendesignal mit der Sendefrequenz von bsp. 76 GHz als "gepulstes FMCW-Signal" emittiert; nach Durchlaufen der Übertragungsstrecke wird von der (Empfangs-)Antenne das durch Reflexion an den vorausfahrenden oder nachfolgenden Kraftfahrzeugen (Zielobjekten bzw. Reflexionsobjekten) erhaltene Reflexionssignal als analoges Empfangssignal detektiert. Hierbei wird jedoch sowohl für den Sendebetrieb als auch für den Empfangsbetrieb die gleiche Antenne verwendet, wobei aber zur Erfassung unterschiedlicher Winkelbereiche bei sukzessiven Meßvorgängen unterschiedliche Antennen vorgesehen werden können. Die mehrfache Umschaltung vom Sendebetrieb zum Empfangsbetrieb innerhalb einer Meßphase des Meßvorgangs erfolgt in kurzen zeitlichen Abständen mittels einer von einer Steuereinheit angesteuerten HF-Schalteinheit. Von einer Signalverarbeitungseinheit wird das Empfangssignal weiterverarbeitet und hinsichtlich Frequenzverschiebung (Frequenzdifferenz) und/oder Phasenverschiebung (Phasendifferenz) ausgewertet und hieraus die Entfernungsinformation und ggf. die Geschwindigkeitsinformation durch Spektralanalyse gewonnen.

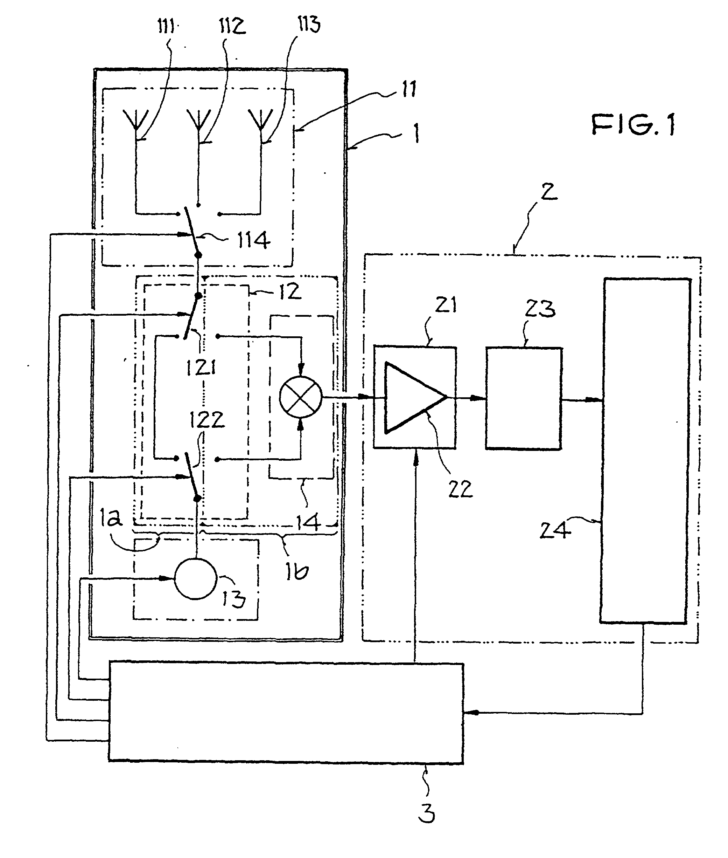

Gemäß der Figur 1 weist das "gepulste FMCW-Radarsystem" hierzu folgenden Aufbau auf:

- Eine Sende-Empfangs-Einheit 1 mit einer "Sendeseite" 1a und einer "Empfangsseite" 1b, die die Funktionen der Sendeeinheit und der Empfangseinheit kombiniert und deren wesentliche Komponenten als einheitliches Modul kompakt zusammengefaßt sind. Die Antenneneinheit 11 der Sende-Empfangs-Einheit 1 zur Emission des Sendesignals und gleichzeitig zur Detektion des Empfangssignals weist drei Antennen 111, 112, 113 und einen Antennenschalter 121 zur Selektion der jeweiligen Antenne 111 bzw. 112 bzw. 113 auf, wobei jede der Antennen 111, 112, 113 für jeweils einen Meßvorgang (mit jeweils unterschiedlichem Winkelbereich des Sendesignals) selektiert wird; das Umschalten des Antennenschalters 121 erfolgt in Abhängigkeit der Zeitdauer eines Meßvorgangs (Zeitdauer eines Meßvorgangs bsp. 5 ms bis 15 ms). Mittels der HF-Schalteinheit 12 mit den beiden HF-Schaltern Sende-Empfangs-Schalter 121 und LO-Schalter 122 kann zwischen der Sendeseite 1a und der Empfangsseite 1b der Sende-Empfangs-Einheit 1, d.h. zwischen dem Sendebetrieb und dem Empfangsbetrieb umgeschaltet werden; das (synchrone) Schalten des Sende-Empfangs-Schalters 121 und des LO-Schalters 122 wird in kurzen zeitlichen Abständen und in Abhängigkeit der vorgegebenen Pulsdauer der Sendepulse durchgeführt (Pulsdauer bsp. 1 µs bis 2 µs). Im Sendebetrieb sind die beiden Schalter Sende-Empfangs-Schalter 121 und LO-Schalter 122 in der linken Stellung (auf der Sendeseite 1a), während des Empfangbetriebs sind die beiden Schalter Sende-Empfangs-Schalter 121 und LO-Schalter 122 in der rechten Stellung (auf der Empfangsseite 1b). Mittels eines bsp. als VCO ausgebildeten Oszillators 13 (Leistung bsp. 10 mW) wird HF-Strahlung mit der Oszillatorfrequenz 76 GHz erzeugt; zusätzlich kann der linear modulierbare Oszillator 13 linear in der Oszillatorfrequenz umgeschaltet werden (Umschaltfrequenz bsp. 500 kHz), d.h die Trägerfrequenz der Sendepulse kann innerhalb einer vorgegebenen Frequenzbandbreite sukzessive variiert werden. In den Meßphasen des Meßvorgangs wird eine wiederholte Umschaltung vom Sendebetrieb zum Empfangsbetrieb vorgenommen: bsp. beträgt die Pulswiederholfrequenz $f_{PW}$ 500 kHz, d.h. die Umschaltung vom Sendebetrieb zum Empfangsbetrieb erfolgt alle 2 µs bzw. die Periodendauer $T_P$ eines Pulszyklus aus Pulsdauer $t_{ON}$ und Pulspause $t_{OFF}$ beträgt bsp. 2 µs; bsp. werden Pulsdauer $t_{ON}$ und Pulspause $t_{OFF}$ gleichlang vorgegeben, bei einer Periodendauer $T_P$ eines Pulszyklus von 2 µs also eine Pulsdauer $t_{ON}$ von 1 µs und eine Pulspause $t_{OFF}$ von 1 µs. Von der Empfangsseite 1b der Sende-Empfangs-Einheit 1 werden als Empfangssignal die vom letztmalig emittierten Sendepuls herrührenden Reflexionssignale aller Zielobjekte (Reflexionsobjekte) vor der Emisssion des nächsten Sendepulses detektiert (d.h. vor der erneuten Umschaltung vom Empfangsbetrieb zum Sendebetrieb). Ein in der Empfangsseite 1b der Sende-Empfangs-Einheit 1 vorgesehener Mischer 14 (die Mischfrequenz entspricht bsp. der momentanen Trägerfrequenz des Sendesignals) überführt das Empfangssignal durch Multiplikation mit der während eines Sendepulses konstanten oszillatorfrequenz als Mischsignal in das Basisband.

- Eine Signalverarbeitungseinheit 2 aus Vorverstärker 21, Filter 22, Analog-Digital-Wandler (A/D-Wandler) 23 und Digitalverarbeitungseinheit 24 zur Signalverarbeitung (Weiterverarbeitung) des Mischsignals. Das vom Vorverstärker 21 verstärkte Mischsignal wird vom (analogen Tiefpaß-)Filter 22 (gefiltert (bsp. einem Butterworth-Filter 7. Ordnung). Das gefilterte (analoge) Mischsignal wird vom A/D-Wandler 23 abgetastet und damit digitalisiert. In der Digitalverarbeitungseinheit 24 erfolgt die Verarbeitung des digitalen signals durch eine spektralanalyse, in der bsp. eine diskrete Fourier-Transformation (DFT) eingesetzt wird. Die Abtastung erfolgt immer an der gleichen Position des Empfangssignals, bsp. am Ende jedes 2 µs dauernden Frequenzschritts. Dadurch ist nur ein geringer Rechenaufwand bei der Abtastung erforderlich und ein preiswerter A/D-Wandler an der Schnittstelle zwischen Analogteil (Sende-Empfangs-Einheit 1, Vorverstärker 21, Filter 22) und Digitalteil (Digitalverarbeitungseinheit 24) mit relativ geringer Taktfrequenz einsetzbar.

• Eine Steuereinheit 3, die die Ansteuerung der beiden HF-Schalter Sende-Empfangs-Schalter 121 und LO-Schalter 122 der HF-Schalteinheit 12 und die Modulation des Oszillators 13 übernimmt. Zur Synchronisation der Sende-Empfangs-Einheit 1 und der Signalverarbeitungseinheit 2 wird die Steuereinheit 3 von der Digitalverarbeitungseinheit 24 angesteuert.

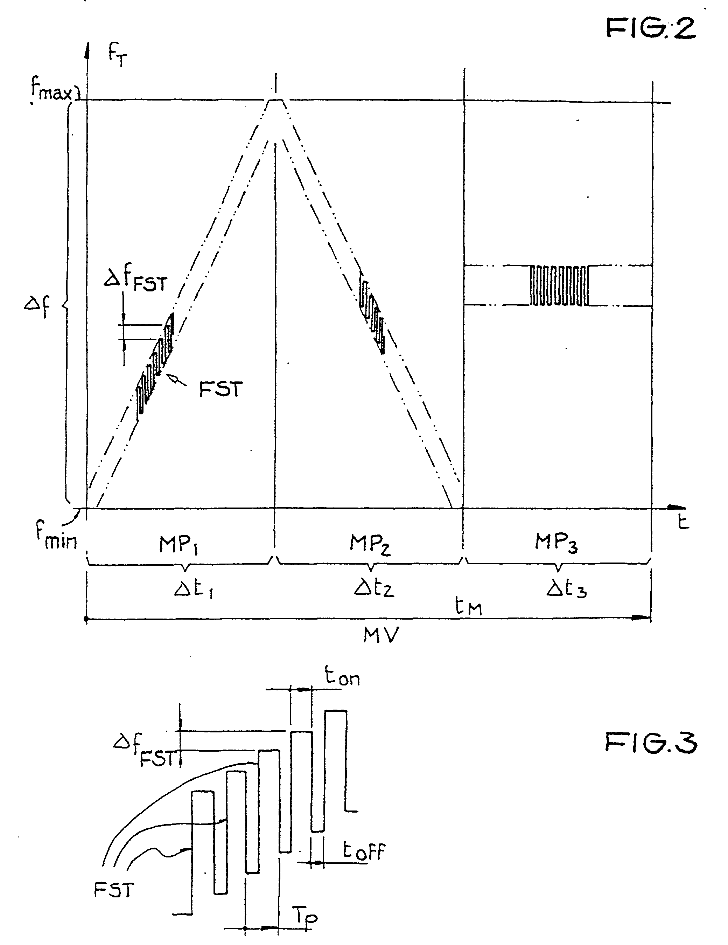

Gemäß dem in der Figur 2 dargestellten zeitlichen Verlauf eines Meßvorgangs MV wird der Meßvorgang MV (Zeitdauer $t_M$, bsp. 6 ms) in drei gleichlange, zeitlich aufeinanderfolgende Meßphasen MP1, MP2, MP3 (mit der jeweiligen Zeitdauer $\Delta t1$, $\Delta t2$, $\Delta t3$) unterteilt:

• in der Meßphase MP1 (Zeitdauer $\Delta t1$, bsp. 2 ms) wird die Trägerfrequenz $f_T$ (Sendefrequenz) der Sendepulse zwischen der Minimalfrequenz $f_{MIN}$ und der Maximalfrequenz $f_{MAX}$ in sukzessiven Frequenzschritten FST innerhalb der Frequenzbandbreite $\Delta f$ ($\Delta f = f_{MAX} - f_{MIN}$, bsp. 50 bis 300 MHz) um jeweils eine Frequenzdifferenz $\Delta f_{FST}$ erhöht. Die von jedem Zielobjekt gemessene Frequenzdifferenz wird von der Entfernung und der Geschwindigkeit des Zielobjekts beeinflußt.

• in der Meßphase MP2 (Zeitdauer $\Delta t2$, bsp. 2 ms) wird die Trägerfrequenz $f_T$ (Sendefrequenz) der Sendepulse zwischen der Maximalfrequenz $f_{MAX}$ und der Minimalfrequenz $f_{MIN}$ in sukzessiven Frequenzschritten FST innerhalb der Frequenzbandbreite $\Delta f$ ($\Delta f = f_{MAX} - f_{MIN}$, bsp. 50 bis 300 MHz) um jeweils die Frequenzdifferenz $\Delta f_{FST}$ erniedrigt. Die von jedem Zielobjekt gemessene Frequenzdifferenz wird von der Entfernung und der Geschwindigkeit des Zielobjekts beeinflußt.

• in der Meßphase MP3 (Zeitdauer $\Delta t3$, bsp. 2 ms) wird die Trägerfrequenz $f_T$ (Sendefrequenz) der Sendepulse konstant gehalten, bsp. bei einer Trägerfrequenz $f_T$ von 76 GHz. Demzufolge wird eine reine Dopplermessung vorgenommen, die dazu dient, die Meßergebnisse aus den beiden Meßphasen MP1 und MP2 zu validieren.

In allen drei Meßphasen MP1, MP2, MP3 eines Meßvorgangs MV wird innerhalb jedes Frequenzschritts FST einmal vom Sendebetrieb zum Empfangsbetrieb umgeschaltet, so daß der Trägerfrequenz $f_T$

(Sendefrequenz) ein pulsförmiger Verlauf aufgeprägt wird; insbesondere erhält man in den beiden Meßphasen MP1 und MP2 (d.h. während des rampenförmigen Verlaufs des Sendesignals) ein frequenzmoduliertes pulsförmiges Sendesignal.

Gemäß der Figur 3 ist der (pulsförmige) zeitliche Verlauf der Trägerfrequenz $f_T$ (Sendefrequenz) während mehrerer sukzessiver Frequenzschritte FST beispielhaft für die Meßphase MP1 aus der Figur 2 vergrößert dargestellt. Die Periodendauer $T_P$ eines Pulszyklus der Sendepulse setzt sich aus der Pulsdauer $t_{ON}$ bzw. dem Sendeintervall (Sendebetrieb) und der Pulspause $t_{OFF}$ bzw. dem Empfangsintervall (Empfangsbetrieb) zusammen. Die Pulswiederholfrequenz $f_{PW}$ ergibt sich demnach zu $f_{PW} = T_P^{-1}$ ($T_P = t_{ON} + t_{OFF}$), der sog. "Duty-Cycle" D zu $D = t_{ON}/T_P$. Über die Pulsdauer $t_{ON}$ der Sendepulse wird die mittlere Sendeleistung und damit die Reichweite des Radarsystems bestimmt. Bsp. wird die Pulsdauer $t_{ON}$ und die Pulspause $t_{OFF}$ jeweils zu 1 µs vorgegeben (Periodendauer $T_P$ eines Pulszyklus damit 2 µs), woraus sich ein Duty-Cycle D von 50% ergibt.

Die Signalverarbeitung und die Auswertung des Empfangssignals erfolgt im wesentlichen analog zu einem FMCW-Radarsystem und soll daher nicht im Detail beschrieben werden; für die Vorgabe der Spezifikationen des Verfahrens ist jedoch folgendens zu beachten:

• die gewünschte Entfernungsauflösung (Ortsauflösung) $\Delta R$ des Radarsystems bestimmt die Bandbreite $\Delta f$ der Trägerfrequenz $f_T$:

$$\Delta R = \tfrac{1}{2}C/\Delta f \qquad (c = \text{Lichtgeschwindigkeit});$$

d.h. die Entfernungsauflösung $\Delta R$ wird nicht von der Pulsdauer $t_{ON}$ der einzelnen Sendepulse, sondern alleine von der Frequenzbandbreite $\Delta f$ der Trägerfrequenz $f_T$ (dem Frequenzhub der Trägerfrequenz $f_T$) über alle Frequenzschritte FST bestimmt. Für eine gewünschte Entfernungsauflösung $\Delta R$ von bsp. 1.2 m beträgt die Bandbreite $\Delta f$ der Trägerfrequenz $f_T$ bsp. 120 MHz: hierzu wird bsp. während der Meßphase MP1 die Trägerfrequenz $f_T$ von 76.5 GHz bis 76.62 GHz inkrementiert, während der Meßphase MP2 von 76.62 GHz bis 76.5 GHz dekrementiert; während der Meßphase MP3 wird die Trägerfrequenz $f_T$ bsp. bei 76.5 GHz konstant gehalten.

• die gewünschte Geschwindigkeitsauflösung $\Delta v$ des Radarsystems bestimmt die Zeitdauer $\Delta t1$, $\Delta t2$, $\Delta t3$ der Meßphasen MP1, MP2 und MP3. Bsp. ergibt sich für eine Geschwindigkeitsauflösung $\Delta v$ von 1 m/s bzw. 3.6 km/h bei einer Trägerfrequenz $f_T$ von 76 GHz eine Zeitdauer $\Delta t1$, $\Delta t2$, $\Delta t3$ der einzelnen Meßphasen MP1, MP2 und MP3 von jeweils 2 ms.

- der Entfernungseindeutigkeitsbereich $R_E$ des Radarsystems wird von der Periodendauer $T_P$ eines Pulszyklus bzw. der Pulswiederholfrequenz $f_{PW}$ bestimmt:

$$R_E = T_P \cdot C.$$

Bsp. werden in jeder Meßphase MP1, MP2, MP3 mit einer jeweiligen Zeitdauer $\Delta t1$, $\Delta t2$, $\Delta t3$ von 2 ms jeweils 1000 Frequenzschritte FST ($N_{FST}$ = 1000) mit diskreten Sendefrequenzen (Trägerfrequenzen $f_T$) durchgeführt, die sich jeweils um $\Delta f_{FST} = \Delta f/N_{FST}$ = 120 kHz unterscheiden. Bsp. wird pro Frequenzschritt FST eine Abtastung des zeitkontinuierlichen Empfangssignals vorgenommen; d.h. man erhält pro Frequenzschritt FST einen Abtastwert für die digitale Signalverarbeitung, pro Meßphase MP1, MP2, MP3 also insgesamt $N_{FST}$ Abtastwerte Mit den innerhalb einer Meßphase MP1, MP2, MP3 erhaltenen $N_{FST}$ Abtastwerten wird eine Spektralanalyse und eine Zieldetektion durchgeführt; diese Verarbeitungsschritte sind mit denen eines FMCW-Radarsystems vergleichbar.

**Patentansprüche**

1. Verfahren zum Betrieb eines Radarsystems aus mindestens einer Sendeeinheit (1a), mindestens einer Empfangseinheit (1b) und einer Signalverarbeitungseinheit (2), bei dem in einem Meßvorgang (MV) mit mindestens einer Meßphase (MP1, MP2, MP3) die Entfernung und/oder die Radialgeschwindigkeit von im Beobachtungsbereich befindlichen Reflexionsobjekten bestimmt wird, **dadurch gekennzeichnet,**

   - **daß** in jeder Meßphase (MP1, MP2, MP3) des Meßvorgangs (MV) mehrfach und in kurzen zeitlichen Abständen zwischen einem sendebetrieb und einem Empfangsbetrieb umgeschaltet wird,

   - **daß** jeweils im sendebetrieb alle Empfangseinheiten (1b) des Radarsystems abgeschaltet werden und von mindestens einer Sendeeinheit (1a) des Radarsystems ein pulsförmiges Sendesignal mit sukzessiven zeitlich aufeinanderfolgenden Sendepulsen einer bestimmten Pulsdauer ($t_{ON}$) und einer bestimmten Trägerfrequenz ($f_T$) emittiert wird, wobei im Falle einer Entfernungsbestimmung in mindestens einer Meßphase (MP1, MP2) des Meßvorgangs (MV) ein frequenzmoduliertes pulsförmiges Sendesignal emittiert wird,

   - **daß** jeweils im Empfangsbetrieb in den Pulspausen ($t_{OFF}$) der Sendepulse alle Sendeeinheiten (1a) des Radarsystems abgeschaltet werden und von mindestens einer Empfangseinheit (1b) des Radarsystems als Empfangssignal sämtliche von dem letztmalig emittierten Sendepuls stammenden Reflexionsignale aus dem gesamten Beobachtungsbereich vor der Emisssion des nächsten Sendepulses detektiert werden,

   - und **daß** von der Signalverarbeitungseinheit (2) die Entfernung und/oder die Radialgeschwindigkeit von allen im Beobachtungsbereich befindlichen Reflexionsobjekten durch Auswertung der zwischen dem Sendesignal und dem Empfangssignal ermittelten Frequenzdifferenz und/oder Phasendifferenz bestimmt wird.

2. Verfahren nach Anspruch 1, **dadurch gekennzeichnet, daß** in mindestens einer Meßphase (MP1, MP2) des Meßvorgangs (MV) die Trägerfrequenz ($f_T$) der Sendepulse in vorgegebenen Frequenzschritten (FST) frequenzmoduliert wird.

3. Verfahren nach Anspruch 1 oder 2, **dadurch gekennzeichnet, daß** in mindestens einer Meßphase (MP1, MP2) des Meßvorgangs (MV) die Trägerfrequenz ($f_T$) der Sendepulse innerhalb einer vorgegebenen Frequenzbandbreite ($\Delta f$) linear frequenzmoduliert wird.

4. Verfahren nach Anspruch 3, **dadurch gekennzeichnet, daß** in mindestens einer Meßphase (MP1) des Meßvorgangs (MV) die Trägerfrequenz ($f_T$) der Sendepulse linear ansteigend und in mindestens einer anderen Meßphase (MP2) des Meßvorgangs die Trägerfrequenz ($f_T$) der Sendepulse linear abfallend frequenzmoduliert wird.

5. Verfahren nach einem der Ansprüche 1 bis 4, **dadurch gekennzeichnet, daß** in mindestens einer Meßphase (MP3) des Meßvorgangs (MV) die Trägerfrequenz ($f_T$) der Sendepulse konstant gehalten wird.

6. Verfahren nach einem der Ansprüche 1 bis 5, **dadurch gekennzeichnet, daß** in mindestens einer Meßphase des Meßvorgangs während eines Frequenzschritts (FST) mehrere Sendepulse mit jeweils konstanter Trägerfrequenz ($f_T$) emittiert werden.

7. Verfahren nach einem der Ansprüche 1 bis 6, **dadurch gekennzeichnet, daß** die Entfernung und/oder die Radialgeschwindigkeit von allen im Beobachtungsbereich befindlichen Reflexionsobjekten gleichzeitig bestimmt wird.

8. Verfahren nach einem der Ansprüche 1 bis 7, **da-**

**durch gekennzeichnet, daß** in der Signalverarbeitungseinheit (2) die Reflexionssignale mehrerer zeitlich aufeinanderfolgender Sendepulse analog integriert und anschließend digitalisiert werden.

9. Verfahren nach einem der Ansprüche 1 bis 7, **dadurch gekennzeichnet, daß** in der Signalverarbeitungseinheit (2) die Reflexionssignale des letzten emitttierten Sendepulses unmittelbar digitalisiert werden.

10. Verfahren nach einem der Ansprüche 1 bis 9, **dadurch gekennzeichnet, daß** das Umschalten zwischen dem Sendebetrieb und dem Empfangsbetrieb mittels einer mit der mindestens einen Sendeeinheit (1a) und der mindestens einen Empfangseinheit (1b) verbundenen HF-Schalteinheit (12) vorgenommen wird.

11. Verfahren nach einem der Ansprüche 1 bis 10, **dadurch gekennzeichnet, daß** die mindestens eine Sendeeinheit (1a) und die mindestens eine Empfangseinheit (1b) in einer Sende-Empfangs-Einheit (1) integriert werden.

## Claims

1. Method for operation of a radar system comprising at least one transmitting unit (1a), at least one receiving unit (1b) and one signal processing unit (2), in which method the range and/or the radial velocity of reflection objects which are located in the observation area are/is determined in a measurement process (MV) having at least one measurement phase (MP1, MP2, MP3), **characterized**

   • **in that** switching takes place repeatedly and at short time intervals between a transmission mode and a reception mode in each measurement phase (MP1, MP2, MP3) of the measurement process (MV),

   • **in that** all of the receiving units (1b) in the radar system are in each case switched off in the transmission mode and at least one transmitting unit (1a) in the radar system emits a pulsed transmission signal with successive transmission pulses with a specific pulse duration ($t_{ON}$) and at a specific carrier frequency ($f_T$), with a frequency-modulated, pulsed transmission signal being emitted in at least one measurement phase (MP1, MP2) of the measurement process (MV) for range determination,

   • **in that** all of the transmitting units (1a) in the radar system are in each case switched off in the pulse pauses ($t_{OFF}$) between the transmission pulses in the reception mode, and at least one receiving unit (1b) in the radar system detects as the received signal all of the reflection signals which originate from the most recently emitted transmission pulse, from the entire observation area, before the emission of the next transmission pulse,

   • and **in that** the signal processing unit (2) determines the range and/or the radial velocity of all the reflection objects which are located in the observation area, by evaluation of the frequency difference and/or phase difference determined between the transmission signal and the received signal.

2. Method according to Claim 1, **characterized in that** the carrier frequency ($f_T$) of the transmission pulses is frequency-modulated in predetermined frequency steps (FST) in at least one measurement phase (MP1, MP2) of the measurement process (MV).

3. Method according to Claim 1 or 2, **characterized in that** the carrier frequency ($f_T$) of the transmission pulses is frequency-modulated linearly within a predetermined frequency bandwidth ($\Delta f$) in at least one measurement phase (MP1, MP2) of the measurement process (MV).

4. Method according to Claim 3, **characterized in that** the carrier frequency ($f_T$) of the transmission pulses is frequency-modulated in a linearly rising manner in at least one measurement phase (MP1) of the measurement process (MV) and the carrier frequency ($f_T$) of the transmission pulses is frequency-modulated in a linearly falling manner in at least one other measurement phase (MP2) of the measurement process.

5. Method according to one of Claims 1 to 4, **characterized in that** the carrier frequency ($f_T$) of the transmission pulses is kept constant in at least one measurement phase (MP3) of the measurement process (MV).

6. Method according to one of Claims 1 to 5, **characterized in that** two or more transmission pulses are each emitted at a constant carrier frequency ($f_T$) during one frequency step (FST) in at least one measurement phase of the measurement process.

7. Method according to one of Claims 1 to 6, **characterized in that** the range and/or the radial velocity of all of the reflection objects which are located in the observation area are determined at the same time.

8. Method according to one of Claims 1 to 7, **characterized in that** the reflection signals of two or more successive transmission pulses are integrated in analogue form and are then digitized in the signal processing unit (2).

9. Method according to one of Claims 1 to 7, **characterized in that** the reflection signals from the last emitted transmission pulse are digitized immediately in the signal processing unit (2).

10. Method according to one of Claims 1 to 9, **characterized in that** the switching between the transmission mode and the reception mode is carried out by means of an RF switching unit (12) which is connected to the at least one transmitting unit (1a) and to the at least one receiving unit (1b).

11. Method according to one of Claims 1 to 10, **characterized in that** the at least one transmitting unit (1a) and the at least one receiving unit (1b) are integrated in a transmitting/receiving unit (1).

## Revendications

1. Procédé de fonctionnement d'un système radar se composant d'au moins une unité d'émission (1a), d'au moins une unité de réception (1b) et d'une unité de traitement de signal (2), dans lequel dans un processus de mesure (MV) comprenant au moins une phase de mesure (MP1, MP2, MP3) on détermine la vitesse radiale et/ou la distance d'objets réfléchissants se trouvant dans le champ d'observation,

    **caractérisé en ce que**,

    • dans chaque phase de mesure (MP1, MP2, MP3) du processus de mesure (MV), on commute plusieurs fois et à brefs intervalles de temps entre un fonctionnement en émission et un fonctionnement en réception,
    • à chaque fonctionnement en émission, on coupe toutes les unités de réception (1b) du système radar, et on émet par au moins une unité d'émission (1a) du système radar un signal d'émission pulsé comportant des pulsations d'émission successives se succédant dans le temps, d'une durée de pulsation déterminée ($t_{oN}$) et d'une fréquence porteuse ($f_T$) déterminée, et dans le cas de la détermination d'une distance, on émet dans au moins une phase de mesure (MP1, MP2) du processus de mesure (MV) un signal d'émission pulsé modulé en fréquence,
    • à chaque fonctionnement en réception dans les pauses de pulsations ($t_{OFF}$) des pulsations d'émission, on coupe toutes les unités d'émission (1a) du système radar et on détecte par au moins une unité de réception (1b) du système radar, en tant que signal de réception, l'ensemble des signaux de réflexion provenant de la pulsation d'émission émise la dernière fois, en provenance de l'ensemble du champ d'observation avant l'émission de la nouvelle pulsation d'émission et,
    • on détermine par l'unité de traitement de signal (2) la vitesse radiale et/ou la distance de tous les objets réfléchissants se trouvant dans le champ d'observation, par exploitation de la différence de fréquence et/ou de la différence de phase obtenue entre le signal d'émission et le signal de réception.

2. Procédé selon la revendication 1, **caractérisé en ce que** dans au moins une phase de mesure (MP1, MP2) du processus de mesure (MV), on module en fréquence la fréquence porteuse ($f_T$) de la pulsation d'émission dans des étapes de fréquence prédéterminées (FST).

3. Procédé selon la revendication 1 ou 2, **caractérisé en ce que** dans au moins une phase de mesure (MP1, MP2) du processus de mesure (MV), on module en fréquence la fréquence porteuse ($f_T$) de la pulsation d'émission de façon linéaire à l'intérieur d'une largeur de bande de fréquence prédéterminée ($\Delta f$).

4. Procédé selon la revendication 3, **caractérisé en ce que** dans au moins une phase de mesure (MP1) du processus de mesure (MV) on module en fréquence la fréquence porteuse ($f_T$) de la pulsation d'émission de manière linéairement croissante et dans au moins une autre phase de mesure (MP2) du processus de mesure, on module en fréquence la fréquence porteuse ($f_T$) de la pulsation d'émission de manière linéairement décroissante.

5. Procédé selon l'une des revendications 1 à 4, **caractérisé en ce que** dans au moins une phase de mesure (MP3) du processus de mesure (MV) on maintient constante la fréquence porteuse ($f_T$) de la pulsation d'émission.

6. Procédé selon l'une des revendications 1 à 5, **caractérisé en ce que** dans au moins une phase de mesure du processus de mesure on émet pendant une étape de fréquence (FST) plusieurs pulsations d'émission avec chaque fois une fréquence porteuse ($f_T$) constante.

7. Procédé selon l'une des revendications 1 à 6, **caractérisé en ce qu'**on détermine simultanément la vitesse radiale et/ou la distance de tous les objets réfléchissants se trouvant dans le champ d'observation.

8. Procédé selon l'une des revendications 1 à 7, **caractérisé en ce que** dans l'unité de traitement de signal (2) on intègre de façon analogique puis on numérise les signaux de réflexion de plusieurs pulsations d'émission se succédant dans le temps.

9. Procédé selon l'une des revendications 1 à 7, **caractérisé en ce que** dans l'unité de traitement de signal (2) on numérise directement les signaux de réflexion de la dernière pulsation d'émission émise.

10. Procédé selon l'une des revendications 1 à 9, **caractérisé en ce qu'**on procède à la commutation entre le fonctionnement en émission et le fonctionnement en réception au moyen d'une unité de commutation HF (12) reliée à l'au moins une unité d'émission (1a) et à l'au moins une unité de réception (1b).

11. Procédé selon l'une des revendications 1 à 10, **caractérisé en ce que** l'au moins une unité d'émission (1a) et l'au moins une unité de réception (1b) sont intégrées dans une unité d'émission-réception (1).

FIG.1

FIG.2

FIG.3